# FASCICULE DE BREVET EUROPEEN

(11) **EP 0 718 245 B1**
(45) Date de publication et mention de la délivrance du brevet: **12.09.2001**
(21) Numéro de dépôt: 95402472.5
(22) Date de dépôt: 06.11.1995
(51) Int. Cl.: C03B 37/014, C03B 33/085

(54) **Installation de fabrication ou de recharge d'une préforme, pourvue d'un dispositif de soutien de la préforme et des procédés mis en oeuvre dans une telle installation**
Vorrichtung zum Herstellen oder Beschichten einer Vorform mit einer Einrichtung zum Unterstützen der Vorform und Verfahren wobei eine solche Vorrichtung benützt wird
Apparatus for manufacturing or recharging a preform, comprising a structure for supporting the preform and methods in which such an apparatus is used

(30) Priorité: 08.11.1994 FR 9413378
(43) Date de publication de la demande: 26.06.1996
(73) Titulaire: ALCATEL, 75008 Paris (FR)
(72) Inventeur: Humbert, Patrick, F-75011 Paris (FR); Goudeau, Jacques, F-91600 Savigny-sur-Orge (FR); Ripoche, Pierre, F-45300 Pithiviers (FR); Landi, Joel, F-75015 Paris (FR)
(74) Mandataire: Laroche, Danièle

(56) Documents cités:
- EP-A- 0 266 763
- WO-A-84/00029
- WO-A-94/20870

## Description

L'invention concerne un dispositif de soutien d'une préforme, une installation de fabrication ou de recharge d'une préforme pour fibre optique, pourvue d'un tel dispositif, des procédés mis en oeuvre dans une telle installation, et les préformes fabriquées ou rechargées selon de tels procédés.

L'invention concerne plus particulièrement un dispositif de soutien d'une préforme fabriquée ou rechargée dans une installation de fabrication ou de recharge de préformes à âme centrale. Ce type d'installation comprend classiquement au moins des moyens de rotation d'axe de rotation horizontal et de translation sur lesquels est montée l'âme support de la préforme à fabriquer ou à recharger, et des moyens de torche à plasma et d'apport de matière disposés radialement à ladite âme support, destinés à la réalisation ou à la recharge de la préforme par enrobage.

Les moyens de rotation mettent en rotation l'âme support, et les moyens de torche à plasma et d'apport de matière, ayant un mouvement de translation axial parallèle à âme support, déposent sur âme support, selon des principes et/ou des procédés connus, les couches constitutives de la préforme en cours de fabrication. Dans une variante de réalisation c'est la préforme qui est animée d'un mouvement de translation, la torche restant fixe.

De tels moyens sont aussi mis en oeuvre pour la phase dite de recharge de préforme, selon laquelle on épaissit une préforme déjà existante.

Postérieurement à la phase de fabrication ou de recharge de la préforme, il y a actuellement une phase de refroidissement, puis une phase manuelle de coupage de la préforme. Durant cette phase de coupage, l'opérateur introduit un soutien sous la préforme et vient couper la préforme à l'aide d'un chalumeau ou équivalent. La phase de refroidissement est une nécessité de sécurité induite par la présence d'un opérateur.

Un tel procédé induit une perte conséquente de temps pour le refroidissement de la préforme. Toute diminution de cette phase de refroidissement augmente considérablement les risques d'accident pour opérateur. Cependant la réchauffe locale d'une préforme refroidie, lors de l'étape de coupe, peut avoir des conséquences importantes sur l'homogénéité et les qualités optiques de la préforme dans la zone réchauffée. Il peut notamment s'y produire des fissures. Il faut donc trouver un compromis qualité / sécurité du fait de la présence humaine lors de la phase de coupe.

En outre on arrive actuellement à des préformes dont les limites dimensionnelles sont notamment imposées par le poids de la préforme. La préforme soumise à son poids prend une flèche. Cette flèche induit des risques de rupture d'embout. En outre la flèche peut avoir des conséquences néfastes sur l'homogénéité de la préforme.

EP-A-0 266 763 décrit un dispositif de soutien des préformes. Ce dispositif comprend un moyen de soutien mis au contact de la préforme en rotation, et qui est asservi de telle manière que lorsqu'un défaut de contact est détecté, du fait d'un défaut d'alignement de la préforme et/ou d'une forme ovale de la section de la préforme, le moyen de soutien cherche à revenir au contact de la préforme et cela à une vitesse déterminée. Ainsi, par étapes successives les défauts sont corrigés. Cependant le moyen de soutien est lié en translation à la torche. Le déplacement en translation du moyen de soutien au contact de la préforme peut abîmer la préforme en cours de fabrication. En outre l'homogénéité de la préforme en cours de fabrication est liée à la synchronisation des mouvements radiaux du moyen de soutien avec la vitesse de translation et la puissance délivrée par la torche. Cette synchronisation est complexe à mettre en place.

Un but de la présente invention est de proposer une installation de fabrication de préforme permettant de pallier les inconvénients ci-dessus mentionnés.

Un autre but de la présente invention est de proposer un dispositif de soutien de la préforme permettant une diminution des risques de rupture d'embout et des contraintes mécaniques dues à la masse de la préforme, et donc une augmentation du diamètre et/ou de la longueur de la préforme.

Le but d'une réalisation préféré de la présente invention est de fournir une installation automatique ou semiautomatique de soutien de la préforme ne nécessitant plus la présence d'un opérateur de manière à diminuer sensiblement la durée de la phase de séparation et à éviter les défauts qualitatifs induits par un réchauffage de la préforme.

Autres buts de la présente invention sont de fournir un procédé de fabrication et un procédé de coupage d'une préforme dans cette installation preférée.

A cet effet l'invention concerne one installation de fabrication ou de recharge de préformes à âme centrale. L'installation comprend au moins des moyens de rotation d'axe de rotation horizontal ayant deux points de montage entre lesquels est montée l'âme support de la préforme à fabriquer ou de recharger, des moyens de torche à plasma et d'apport de matière disposés radialement à ladite âme support et ayant un mouvement relatif de translation axiale par rapport audit moyens de rotation, parallèle à l'âme support pour la réalisation de la préforme autour de l'âme support. Le dispositif selon l'invention comprend des moyens de soutien commandés constituant des points d'appui complémentaires localisés entre lesdits points de montage pour ladite préforme en cours de fabrication ou en cours de recharge, quels moyens de soutien sont solidaires en translation axiale desdits moyens de rotation.

Avantageusement, les moyens de soutien commandés comprennent des moyens pour détecter la flèche de la préforme; au moins un élément de soutien monté sur des moyens de positionnement commandés, mobiles entre une position extrême active où l'élément de soutien est au contact de la préforme en cours de fabrication ou de recharge, et une position extrême inactive où l'élément de soutien est écarté de la préforme en cours de fabrication ou de recharge; et des moyens d'asservissement pour asservir les moyens de positionnement commandés en position extrême active, à une consigne prédéterminée de la flèche de la préforme.

L'élément de soutien peut comprendre au moins une roue libre d'axe parallèle à l'âme centrale, montée libre en rotation sur les moyens de positionnement commandés, ayant une bande de roulement venant, dans la position extrême active, au contact tangentiel de la préforme en cours de fabrication ou de recharge.

Selon une caractéristique préféreé de l'invention les moyens de positionnement comprennent des moyens de synchronisation avec le mouvement de translation axiale relatif entre la préforme et les moyens de torche à plasma et d'apport de matière, pour passer en position extrême inactive lorsque les moyens de torche à plasma et d'apport de matière croisent les moyens de positionnement.

Avantageusement le dispositif comprend une pluralité d'éléments de soutien chacun avec des moyens de positionnement associés, disposés à intervalle axial régulier radialement à l'axe de rotation horizontal des moyens de rotation.

En position extrême active, les roues libres sont préférentiellement au contact de la partie inférieure de périphérie de la préforme.

L'invention concerne aussi un procédé de soutien d'une préforme en cours de fabrication ou en cours de recharge dans une installation telle que décrite ci-dessus, dans lequel :
- on compare la valeur de la flèche de l'âme avec la valeur de consigne;
- on commande les moyens de positionnement pour atteindre ladite valeur de consigne;
- on commande de façon synchronisée avec le mouvement de translation axiale relatif entre la préforme et les moyens de torche à plasma et d'apport de matière, le passage en position extrême inactive des moyens de positionnement lorsque les moyens de torche à plasma et d'apport de matière croisent lesdits moyens de positionnement;
- on commande le retour en position active des moyens de positionnement après une temporisation de refroidissement.

L'invention concerne enfin un procédé de coupage d'une préforme fabriquée ou rechargée dans une installation telle que décrite ci-dessus, dans lequel, immédiatement à l'issue de la phase de fabrication ou de recharge, la préforme étant toujours en rotation :
- on compare la valeur de la contrainte de flèche de l'âme avec la valeur de consigne;
- on commande les moyens de positionnement pour atteindre ladite valeur de consigne;
- on positionne la torche à plasma en regard de la section de coupe choisie;
- on actionne la torche à plasma pour effectuer la coupe.

Un premier avantage de la présente invention est de ne plus être limité par la masse de la préforme. Cela permet notamment d'augmenter le diamètre ou la longueur des préformes sans risquer la rupture d'embout ou la déformation importante de la préforme soumise à son propre poids.

Un autre avantage de la présente invention est la possibilité d'automatiser la phase de coupe de la préforme, réduisant ainsi de façon importante le temps nécessaire à la dépose et au stockage d'une préforme fabriquée ou rechargée, éliminant le facteur de risque humain, améliorant la qualité des préformes ainsi traitées.

D'autres avantages et caractéristiques de la présente invention résulteront de la description qui va suivre en référence aux dessins annexés dans lesquels :

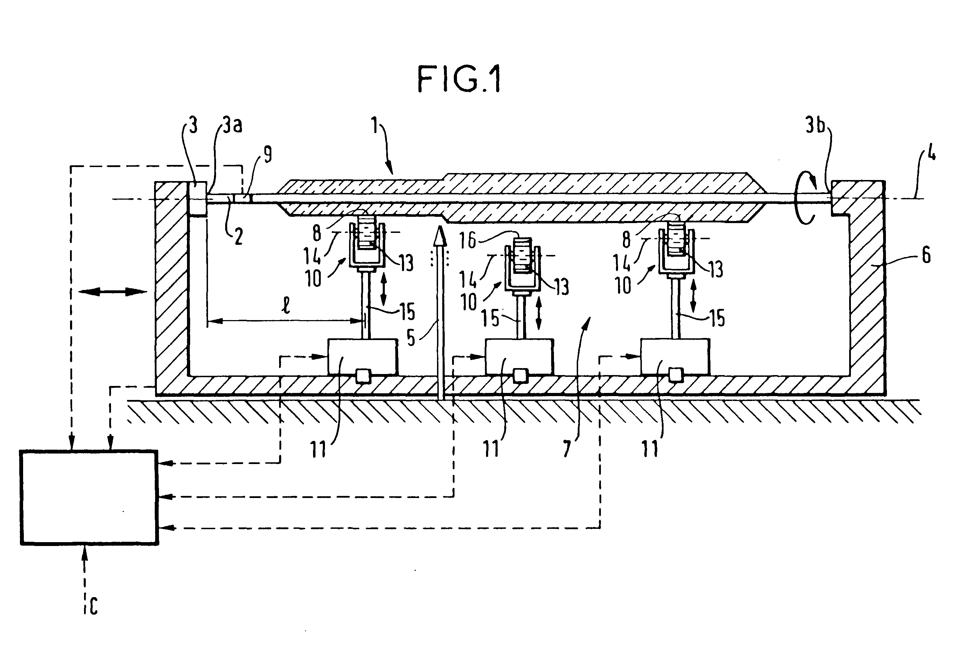

- la figure 1 est une représentation schématique d'une installation selon l'invention.
- les figures 2A, 2B, 2C sont une représentation schématique séquentielle de la synchronisation du dispositif selon l'invention.
- La figure 3 est une représentation schématique de la phase de coupe selon l'invention.

Le dispositif selon l'invention est destiné à être monté sur une installation de fabrication ou de recharge d'une préforme 1 ayant une âme centrale support 2, connue de l'art antérieur. De façon connue, cette installation comprend au moins des moyens de rotation 3 d'axe de rotation horizontal 4 sur lesquels est montée l'âme support 2 de la préforme 1 à fabriquer ou à recharger, et des moyens 5 de torche à plasma et d'apport de matière disposés radialement à ladite âme support 2. De façon connue, l'installation permet un mouvement relatif de translation axiale des moyens 5 de torche à plasma et d'apport de matière parallèle à l'âme support 2 pour la réalisation de la préforme 1 autour de l'âme support 2.

Dans la forme de réalisation représentée sur les figures, les moyens de rotation 3 sont embarqués sur un châssis 6 mobile en translation parallèlement à l'axe de rotation 4, les moyens 5 de torche à plasma et d'apport de matière étant fixes.

La préforme en cours de fabrication ou de recharge est donc translatée en même temps que le châssis auquel elle est attachée en deux points d'appui qui sont les points de montage 3a, 3b de l'âme support 2 sur les moyens de rotation 3.

Selon la présente invention, le dispositif de soutien comprend des moyens de soutien commandés 7 disposés entre les points de montage 3a, 3b et constituant des points d'appui 8 complémentaires de la préforme 1. Ainsi, si l'on choisit judicieusement l'emplacement des moyens de soutien commandés 7, on peu diminuer la flèche due à la masse de la préforme en cours de fabrication ou en cours de recharge.

Les moyens de soutien commandés 7 comprennent des moyens 9 pour mesurer la flèche de la préforme 1; au moins un élément de soutien 10 monté sur des moyens de positionnement commandés 11, mobiles entre une position extrême active où l'élément de soutien 10 est au contact 8 de la préforme 1 en cours de fabrication, et une position extrême inactive où l'élément de soutien 10 est écarté de la préforme 1 en cours de fabrication; et des moyens d'asservissement 12 pour asservir les moyens de positionnement 11 commandés en position extrême active, à une consigne C prédéterminée commandable de flèche de la préforme 1.

Les moyens 9 pour mesurer la flèche de la préforme peuvent être des jauges de contrainte 9 disposées sur l'âme support 2 associées à un calculateur 12 qui, sur la base de la contrainte observée, calcule la flèche de la préforme et commande les moyens de positionnement 11 en conséquence. Ces moyens 9 pour mesurer la flèche peuvent être tout autre moyen de mesure de déplacement connu, relié à un calculateur 12 de commande des moyens de positionnement.

L'élément de soutien 10 représenté sur les figures comprend au moins une roue libre 13 d'axe 14 parallèle à l'axe de rotation 4 supporté par une tige 15 des moyens de positionnement 11 mobile radialement entre les positions extrêmes. Avantageusement la roue est façonnée dans un matériau résistant aux hautes températures, comme notamment le graphite. Il faut néanmoins que ce matériau ne soit pas polluant pour la préforme en cours de réalisation.

Dans la position extrême active, la bande de roulement 16 de la roue 13 est au contact tangentiel de la périphérie de la préforme 1, est entraînée en rotation par la préforme 1, et constitue un point d'appui 8 forcé pour la préforme 1 atténuant ou supprimant la flèche de la préforme 1.

Dans la position extrême inactive, la roue 13 n'est plus au contact de la préforme.

Dans la forme de réalisation des figures, le dispositif de soutien comprend trois éléments de soutien 10 avec leur moyens de positionnement 11 associés, solidaires en translation axiale du châssis 6, divisant en quatre intervalles ℓ réguliers la distance entre les points de montage 3a, 3b. Les moyens de positionnement 11 sont reliés au calculateur 12 qui les commande.

Le dispositif selon l'invention comprend en outre des moyens de synchronisation des moyens de positionnement 11 avec le mouvement de translation axiale relatif entre la préforme 1 et les moyens 5 de torche à plasma et d'apport de matière. Ces moyens de synchronisation ont pour objet de commander le passage en position extrême inactive d'un élément de soutien 10 croisant les moyens 5 de torche à plasma et d'apport de matière. Ces moyens de synchronisation peuvent être logiciel ou électromécanique ou optique, constitués par des interrupteurs judicieusement localisés avant et après chaque élément de soutien 10, de manière que le passage de l'interrupteur avant devant les moyens 5 de torche à plasma et d'apport de matière désactive les moyens de positionnement 11 concernés, et le passage de l'interrupteur arrière devant les moyens 5 de torche à plasma et d'apport de matière réactive les moyens de positionnement concernés. Dans la forme de réalisation représentée sur les figures, les éléments de soutien 10 viennent avantageusement au contact de la préforme 1 dans la partie périphérique inférieure.

Ainsi dans la forme de réalisation représentée sur les figures, la distance maximale entre deux points d'appui de la préforme 1 en cours de fabrication ou en cours de recharge est égale à 2 ℓ Pour une longueur totale de la préforme égale à 4 ℓ.

L'asservissement des moyens de positionnement peut être continu (période d'échantillonnage très petite), ou réalisé à des temps donnés prédéterminés du processus de fabrication ou de recharge de la préforme.

Le procédé de soutien d'une préforme en cours de fabrication ou en cours de recharge dans une installation pourvue d'un dispositif tel que décrit précédemment, comprend les étapes suivantes :
au cours de la fabrication ou de la recharge de la préforme :
- on compare la valeur de flèche de l'âme avec la valeur de consigne;
- on commande les moyens de positionnement pour atteindre ladite valeur de consigne;
- on commande de façon synchronisée avec le mouvement de translation axiale relatif entre la préforme et les moyens de torche à plasma et d'apport de matière, le passage en position extrême inactive des moyens de positionnement lorsque les moyens de torche à plasma et d'apport de matière croisent lesdits moyens de positionnement.

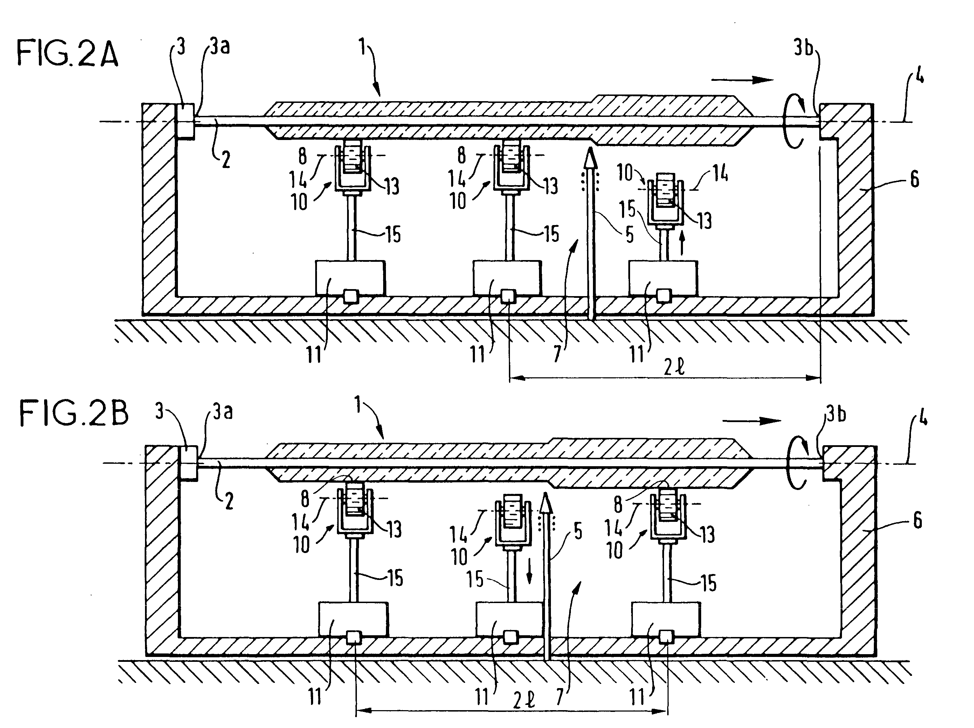

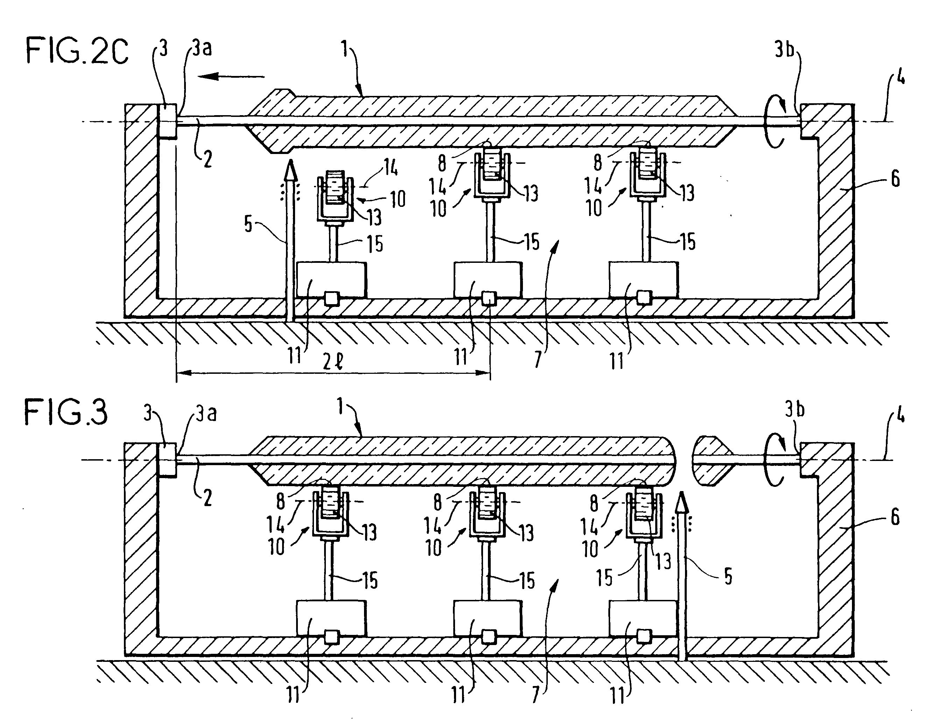

Les figures 2A, 2B, 2C représentent une séquence de synchronisation du dispositif.

Sur la figure 2A le châssis 6 se déplace vers la droite, l'élément de soutien 10 de droite est en phase de passage de la position inactive à la position active. L'élément de soutien 10 de droite arrivera au contact de la préforme 1 après une temporisation prédéterminée calculée pour que le refroidissement de la surface de contact de la préforme 1 soit suffisant pour que l'élément de soutien 10 ne laisse pas un sillon en profondeur dans la préforme 1.

Sur la figure 2B l'élément de soutien 10 central est en phase de passage de la position active à la position inactive. Cette phase intervient lorsque les éléments 10 de soutien de droite et de gauche sont en position active, et l'élément 10 central est à proximité des moyens 5 de torche à plasma et d'apport de matière.

Sur la figure 2C le châssis 6 se déplace vers la gauche, l'élément de soutien 10 de gauche étant en position inactive depuis qu'il a croisé les moyens 5 de torche à plasma et d'apport de matière lorsque le châssis 6 se déplaçait vers la droite, et ne reviendra en position active qu'après avoir recroisé les moyens 5 de torche à plasma et d'apport de matière dans l'autre sens et après la temporisation de refroidissement.

En outre une installation telle que décrite ci-dessus et comprenant un dispositif de soutien permet la mise en oeuvre d'un procédé de coupage de la préforme fabriquée ou rechargée. Selon ce procédé, immédiatement à l'issue de la phase de fabrication ou de recharge, la préforme étant toujours en rotation :
- on compare la valeur de la flèche de l'âme avec la valeur de consigne;
- on commande les moyens de positionnement pour atteindre ladite valeur de consigne;
- on positionne la torche à plasma en regard de la section de coupe choisie;
- on actionne la torche à plasma pour effectuer la coupe.

La figure 3 représente la situation dans une phase de coupe.

Le dispositif de soutien selon l'invention permet de s'affranchir des problèmes liés au poids de la préforme et de ce fait autorise des préformes de longueur et ou de diamètre plus important. A l'heure actuelle, les préformes réalisées sur les installations de l'art antérieur ne dépassent pas une masse de 7,5 kg pour une longueur d'environ 1m et un diamètre d'environ 70mm. Une installation pourvue d'un dispositif de soutien permet de multiplier par au moins trois la masse de la préforme, par exemple en réalisant une préforme de 1,3m de long pour un diamètre de 100mm.

Un autre avantage de la présente invention est de permettre une coupe de la préforme immédiatement à l'issue de la fabrication ou de la recharge de la préforme. Cela génère une automatisation de la coupe, donc un gain de productivité et l'élimination de risques pour l'opérateur, et l'élimination des risques de défaut de qualité de la préforme dus au réchauffage de la préforme dans l'art antérieur.

Bien que seule une forme de réalisation ait été décrite, toute modification évidente de l'invention apportée par l'homme du métier doit être comprise dans le cadre de ladite invention.

Notamment tout système capteur permettant de réaliser la mesure de la flèche de la préforme ou d'une caractéristique équivalente, et tout système calculateur permettant de commander les moyens de positionnement sur la base des informations du système capteur sont compris dans le cadre de l'invention.

Le nombre et la localisation des éléments de soutien peuvent être quelconques sans sortir du cadre de l'invention. Par exemple, l'élément de soutien peut être constitué de plusieurs roues de même axe, ou de plusieurs roues d'axe parallèle disposées dans un même plan.

## Revendications

1. Installation de fabrication ou de recharge de préformes (1) à âme support (2), comprenant au moins des moyens de rotation (3) d'axe de rotation horizontal (4) ayant deux points de montage (3a, 3b) entre lesquels est montée l'âme support (2) de la préforme (1) à fabriquer ou à recharger, des moyens (5) de torche à plasma et d'apport de matière disposés radialement à ladite âme support (2) et ayant un mouvement relatif de translation axiale par rapport audit moyens de rotation (3), parallèlement à l'âme support (2) pour la fabrication ou la recharge de ladite préforme (1) autour de ladite âme support (2), des moyens de soutien commandés (7) constituant des points d'appui (8) complémentaires de ladite préforme (1) en cours de fabrication ou en cours de recharge localisés entre lesdits points de montage (3a, 3b), **caractérisé en ce que** les moyens de soutien commandés (7) sont solidaires en translation axiale desdit moyens de rotation (3).

2. Installation selon la revendication 1 **caractérisé en ce que** les moyens de soutien commandés (7) comprennent des moyens (9) pour détecter la flèche de la préforme; au moins un élément de soutien (10) monté sur des moyens de positionnement commandés (11), mobiles entre une position extrême active où ledit élément de soutien (10) est au contact de ladite préforme (1) en cours de fabrication, et une position extrême inactive où l'élément de soutien (10) est écarté de ladite préforme (1) en cours de fabrication; et des moyens d'asservissement (12) pour asservir les moyens de positionnement commandés (11) en position extrême active, à une consigne C prédéterminée de flèche de la préforme (1).

3. Installation selon la revendication 2 **caractérisé en ce que** l'élément de soutien (10) comprend au moins une roue libre (13) d'axe (14) parallèle à l'âme support (2), montée libre en rotation sur les moyens de positionnement commandés (11), ayant une bande de roulement (16) venant au contact tangentiel de la préforme (1) en cours de fabrication, dans la position extrême active.

4. Installation selon l'une quelconque des revendications 2 ou 3 **caractérisé en ce qu'**il comprend, des moyens de synchronisation des moyens de positionnement commandés (11) avec le mouvement de translation axiale relatif entre la préforme (1) et les moyens (5) de torche à plasma et d'apport de matière, pour passer en position extrême inactive lorsque les moyens (5) de torche à plasma et d'apport de matière croisent lesdits moyens de positionnement (11).

5. Installation selon l'une quelconque des revendications 2 à 4 **caractérisé en ce qu'**il comprend une pluralité d'éléments de soutien (10) chacun avec des moyens de positionnement (11) associés, disposés à intervalle axial 1 régulier, et radialement à l'axe de rotation horizontal (4) desdits moyens de rotation (3).

6. Installation selon l'une quelconque des revendications 3 à 5 **caractérisé en ce que** en position extrême active, les roues libres (13) sont au contact de la partie inférieure de périphérie de la préforme (1).

7. Procédé de fabrication d'une préforme (1) dans une installation selon l'une des revendications 2 à 6, **caractérisé en ce que**, au cours de la fabrication ou de la recharge de la préforme:
- on compare la valeur de la flèche de la préforme avec la valeur de consigne;
- on commande les moyens de positionnement (11) pour atteindre ladite valeur de consigne;
- on commande de façon synchronisée avec le mouvement de translation axiale relatif entre la préforme et les moyens (5) de torche à plasma et d'apport de matière, le passage en position extrême inactive des moyens de positionnement lorsque les moyens de torche à plasma et d'apport de matière croisent lesdits moyens de positionnement;
- on commande le retour en position active des moyens de positionnement après une temporisation de refroidissement.

8. Procédé de coupage d'une préforme (1) dans une installation selon l'une des revendications 2 à 6, **caractérisée en ce que** immédiatement à l'issue de la phase de fabrication ou de recharge, la préforme étant toujours en rotation :
- on compare la valeur de la contrainte de flèche de l'âme (2) avec la valeur de consigne; (11)
- on commande les moyens de positionnement( pour atteindre ladite valeur de consigne;
- on positionne la torche (5) à plasma en regard de la section de coupe choisie;
- on actionne la torche à plasma pour effectuer la coupe.

## Patentansprüche

1. Vorrichtung zur Herstellung oder Beschichtung von Vorformen (1) mit einem Trägerkern (2), die wenigstens Rotationsmittel (3) mit horizontaler Rotationsachse (4), die zwei Montagepunkte (3a, 3b) aufweisen, zwischen welchen der Trägerkern (2) der herzustellenden oder zu beschichtenden Vorform (1) angebracht wird, Plasmabrenner- und Materialzufuhrmittel (5), die radial zum Trägerkern (2) angeordnet sind und eine bezüglich der Rotationsmittel (3) axiale relative Verschiebungsbewegung parallel zum Trägerkern (2) zur Herstellung oder Beschichtung der Vorform (1) um den Trägerkern (2) herum aufweisen, und gesteuerte Unterstützungsmittel (7) umfasst, die komplementäre Untertstützungspunkte (8) für die Vorform (1) während der Herstellung oder während der Beschichtung bilden, die sich zwischen den Montagepunkten (3a, 3b) befinden, **dadurch gekennzeichnet, dass** die gesteuerten Unterstützungsmittel (7) in axialer Verschiebung mit den Rotationsmitteln (3) fest verbunden sind.

2. Vorrichtung nach Anspruch 1, **dadurch gekennzeichnet, dass** die gesteuerten Unterstützungsmittel (7) Mittel (9) zum Erfassen der Durchbiegung der Vorform; wenigstens ein Unterstützungselement (10), das an den gesteuerten Positionierungsmitteln (11) angebracht ist, die zwischen einer aktiven äußersten Position, in der das Unterstützungselement (10) die Vorform (1) während der Herstellung berührt, und einer inaktiven äußersten Position beweglich ist, in der das Unterstützungselement (10) während der Herstellung von der Vorform (1) entfernt ist; und Regelungsmittel (12) umfasst, um die gesteuerten Positionierungsmittel (11) bei einem vorherbestimmten Sollwert C der Durchbiegung der Vorform (1) in die aktive äußerste Position zu stellen.

3. Vorrichtung nach Anspruch 2, **dadurch gekennzeichnet, dass** das Unterstützungselement (10) wenigstens ein freies Rad (13) mit einer zum Trägerkern (2) parallelen Achse (14) umfasst, das in der Rotation frei an den gesteuerten Positionierungsmitteln (11) angebracht ist und eine Lauffläche (16) aufweist, die in der aktiven äußersten Position während der Herstellung mit der Vorform (1) in tangentialen Kontakt kommt.

4. Vorrichtung nach einem der Ansprüche 2 oder 3, **dadurch gekennzeichnet, dass** sie Mittel zur Synchronisierung der gesteuerten Positionierungsmittel (11) mit der relativen axialen Verschiebungsbewegung zwischen der Vorform (1) und den Plasmabrenner- und Materialzufuhrmitteln (5) umfasst, um in die inaktive äußerste Position überzugehen, wenn die Plasmabrenner- und Materialzufuhrmittel (5) den Positionierungsmittel (11) begegnen.

5. Vorrichtung nach einem der Ansprüche 2 bis 4, **dadurch gekennzeichnet, dass** sie eine Vielzahl von Unterstützungselementen (10), jeweils mit zugehörigen Positionierungsmitteln (11) umfasst, die in einem regelmäßigen axialen Abstand 1 und radial zur horizontalen Rotationsachse (4) der Rotationsmittel (3) angeordnet sind.

6. Vorrichtung nach einem der Ansprüche 3 bis 5, **dadurch gekennzeichnet, dass** die freien Räder (13) in der aktiven äußersten Position den unteren Teil des Umfangs der Vorform (1) berühren.

7. Verfahren zur Herstellung einer Vorform (1) in einer Vorrichtung nach einem der Ansprüche 2 bis 6, **dadurch gekennzeichnet, dass** während der Herstellung oder der Beschichtung der Vorform:
- der Wert der Durchbiegung der Vorform mit dem Sollwert verglichen wird;
- die Positionierungsmittel (11) so gesteuert werden, dass sie den Sollwert erreichen;
- der Übergang der Positionierungsmittel zur inaktiven äußersten Position mit der relativen axialen Verschiebungsbewegung zwischen der Vorform und den Plasmabrenner- und Materialzufuhrmitteln (5) synchronisiert betätigt wird, wenn die Plasmabrenner- und Materialzufuhrmittel den Positionierungsmitteln begegnen;
- die Rückkehr der Positionierungsmittel in die aktive Position nach einer Verzögerung zur Abkühlung betätigt wird.

8. Verfahren zum Schneiden einer Vorform (1) in einer Vorrichtung nach einem der Ansprüche 2 bis 6, **dadurch gekennzeichnet, dass** direkt nach Abschluss der Herstellungs- oder Beschichtungsphase, wobei sich die Vorform immer noch in Rotation befindet:
- der Wert der Durchbiegungsbeanspruchung des Kerns (2) mit dem Sollwert verglichen wird;
- die Positionierungsmittel (11) so gesteuert werden, dass sie den Sollwert erreichen;
- der Plasmabrenner (5) dem gewählten Schneidebereich gegenüber positioniert wird;
- der Plasmabrenner betätigt wird, um das Schneiden auszuführen.

## Claims

1. An installation for fabricating or building up preforms (1) having supporting cores (2), said installation including at least rotation means (3) having a horizontal axis of rotation (4) and two mounting points (3a, 3b) between which the supporting core (2) of the preform (1) to be fabricated or built up is mounted, plasma-torch and material-supply means (5) disposed radially relative to said supporting core (2) and being mounted to move in axial translation relative to said rotation means (3), and parallel to the supporting core (2) so as to fabricate or build up said preform (1) around said supporting core (2), controlled support means (7) constituting additional abutment points (8) of said preform (1) during fabrication or during building up, localized between said mounting points (3a, 3b), said apparatus being **characterized in that** the controlled support means (7) are prevented from moving in axial translation relative to said rotation means (3).

2. An installation according to claim 1, **characterized in that** the controlled support means (7) comprise: means (9) for detecting the sag of the preform; at least one support element (10) mounted on controlled positioning means (11) mounted to move between an active end position in which said support element (10) is in contact with said preform (1) being fabricated, and an inactive end position in which the support element (10) is not in contact with said preform (1) being fabricated; and servo-control means (12) for servocontrolling the controlled positioning means (11) in the active end position to a predetermined reference value C for the sag of the preform (1).

3. An installation according to claim 2, **characterized in that** the support element (10) includes at least one free wheel (13) whose axis (14) is parallel to the supporting core (2), which wheel is mounted to rotate freely on the controlled positioning means (11), and has a tread strip (16) which comes into tangential contact with the preform (1) being fabricated, in the active end position.

4. An installation according to claim 2 or 3, **characterized in that** it includes synchronization means for synchronizing the controlled positioning means (11) with the relative movement in axial translation between the preform (1) and the plasma-torch and material-supply means (5), so as to go to the inactive end position when the plasma-torch and material-supply means cross paths with said positioning means (11).

5. An installation according to any one of claims 2 to 4, **characterized in that** it includes a plurality of support elements (10), each of which has associated positioning means (11), the elements being disposed at regular axial intervals I and radially to the horizontal axis of rotation (4) of said rotation means (3).

6. An installation according to any one of claims 3 to 5, **characterized in that**, in their active end positions, the free wheels (13) are in contact with the bottom of the periphery of the preform (1).

7. A method of fabricating a preform (1) in an installation according to any one of claims 2 to 6, said method being **characterized in that**, during preform fabrication or building-up:
the value of the sag of the preform is compared with the reference value;
the positioning means (11) are controlled so as to reach said reference value;
the positioning means are controlled such that they are synchronized with the relative movement in axial translation between the preform and the plasma-torch and material-supply means (5), so that the positioning means go to the inactive end position when the plasma-torch and material-supply means cross paths with said positioning means; and
the positioning means are returned to the active position after a cooling time-delay.

8. A method of cutting a preform (1) in an installation according to any one of claims 2 to 6, said method being **characterized in that**, immediately after fabrication or building-up, and with the preform still rotating:
the value of the sag stress of the core (2) is compared with the reference value;
the positioning means (11) are controlled so as to reach said reference value;
the plasma torch (5) is positioned facing the chosen cutting section; and
the plasma torch is actuated so as to cut the preform.
